# EUROPEAN PATENT SPECIFICATION

(11) **EP 0 410 449 B1**
(45) Date of publication and mention of the grant of the patent: **11.09.1996**
(21) Application number: 90114362.8
(22) Date of filing: 26.07.1990
(51) Int. Cl.: G06F 17/20, G06F 17/28, G06F 17/30

(54) **Electronic dictionary apparatus**
Elektronisches Wörterbuch
Dictionnaire électronique

(30) Priority: 28.07.1989 JP 195654/89; 28.07.1989 JP 195656/89; 28.07.1989 JP 88796/89 U
(43) Date of publication of application: 30.01.1991
(73) Proprietor: CASIO COMPUTER COMPANY LIMITED, Shinjuku-ku Tokyo 160 (JP)
(72) Inventor: Fujisawa, Kazuo, c/o Pat. Dep., Hamura R&D Cent., Hamura-machi, Nishitama-gun Tokyo 190-11 (JP); Yoshida, Junichi, c/o Pat. Dep., Hamura R&D Cent., Hamura-machi, Nishitama-gun Tokyo 190-11 (JP); Sanbongi, Masao, c/o Pat. Dep., Hamura R&D Cent., Hamura-machi, Nishitama-gun Tokyo 190-11 (JP)
(74) Representative: Grünecker, Kinkeldey, Stockmair & Schwanhäusser Anwaltssozietät

(56) References cited:
- EP-A- 0 054 667
- GB-A- 2 076 194
- US-A- 4 604 698
- US-A- 4 688 192

## Description

The present invention relates to an electronic dictionary apparatus in accordance with the pre-amble part of claim 1.

Such an apparatus is known from US-A-4688192.

US-A-4688192 discloses in regard to Fig. 5 an electronic dictionary in which, for each data entry such as the word "consider", "contemplate" and "deliberate" additional dictionary information in the form of addresses, which point to the other entries representing synonyms to the respective entry, are stored.

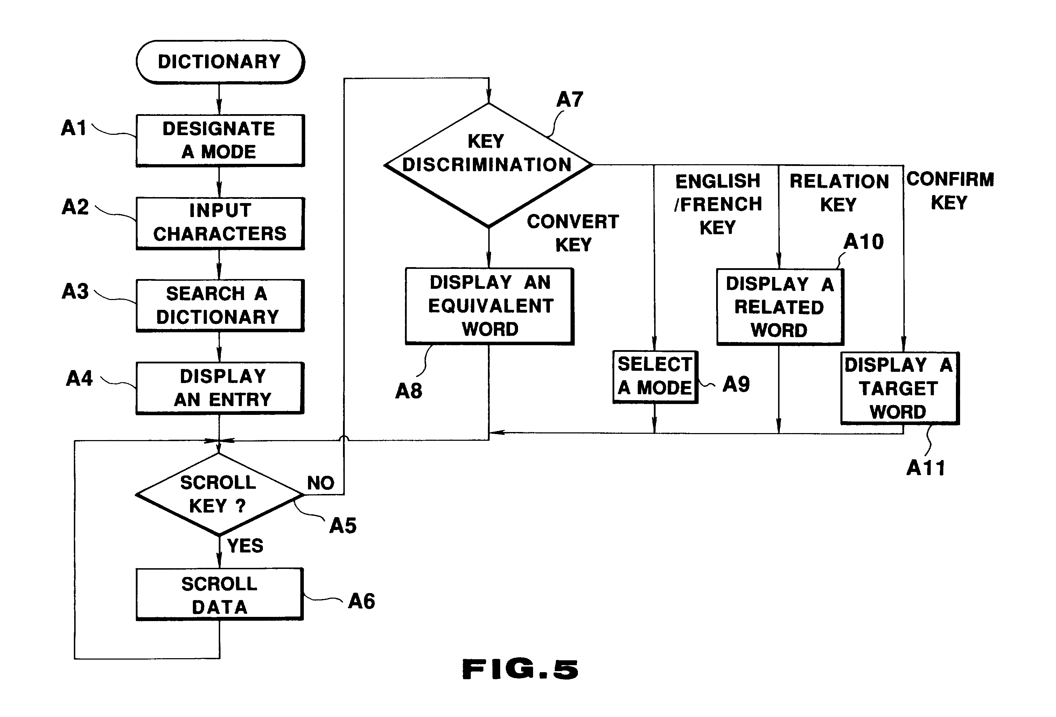

In the example Fig. 5., the words "consider", "contemplate", "deliberate", "study" and "think" are linked to a synonym group since the address number data following each word causes a closed loop search upon inputting one of the linked words.

Within the example explained in connection with Fig. 7 of US-A-4688192, the addresses stored in column 26b' are used for a forward search while the addresses in column 26b" are used for a search in the opposite direction. Further, it is mentioned in column 13, second paragraph, that the addresses assigned to each entry might point to entries which represent equivalent words in another language.

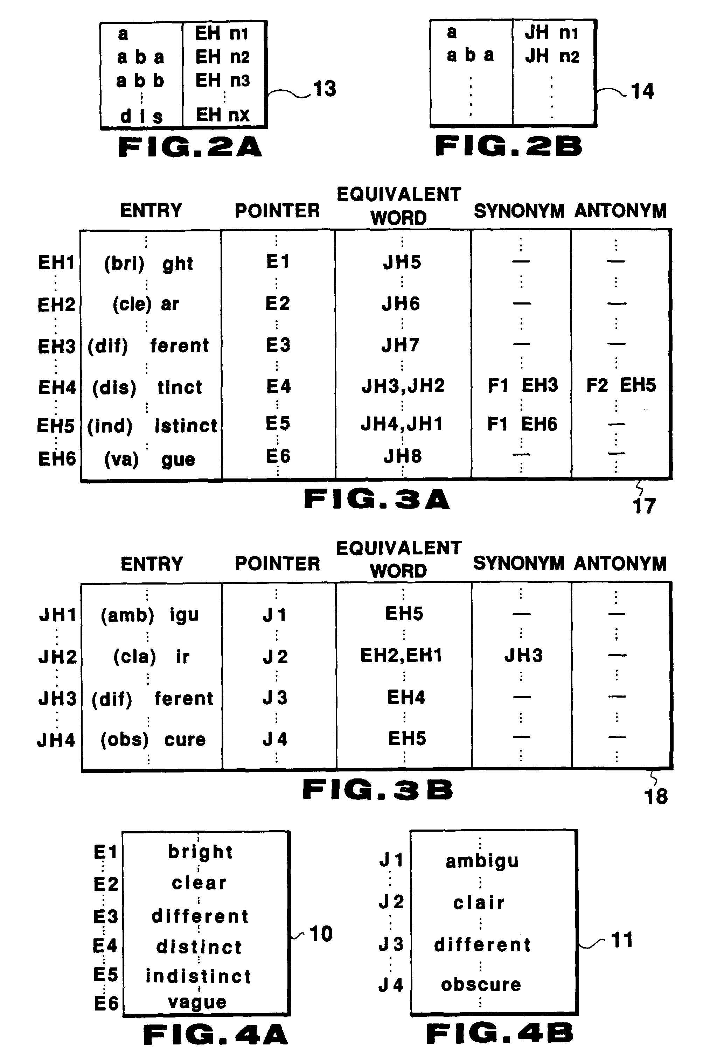

From US-A-4604698 an electronic translator device is known , which translates an inputted first language word into a second language word and retranslates the second language word back to the first language word. As may be seen from Fig. 3 of the document, to each translated word, also the respective re-translated equivalent word is displayed.

Recently, compact electronic apparatuses have been developed which translates one word into its synonym of a different language.

These apparatuses store entries and idioms, synonyms and the like including the associated translated words or equivalent words and so on. When a word is entered, the apparatuses search for an entry coincident with the entered word and display information (dictionary information) associated with the searched entry.

In the prior art electronic dictionary apparatuses, when a synonym is acquired as dictionary information, for example, an operator must reenter this word in order to look up the dictionary with respect to the synonym.

For instance, when a translated word is acquired as dictionary information, in order to look up the dictionary for that word, the opposite dictionary function should be selected and the word should be reentered.

In other words, the prior art apparatuses cannot use dictionary information acquired through the search as it is for the next search. The prior art apparatuses thus require a greater number of key operations for such a process and is difficult to use.

It is the object of the present invention to provide an electronic dictionary apparatus which allows a convenient use for the user.

This object is solved by the subject matter of claim 1.

The other features of the invention and other advantages will be readily apparent from the following description given in conjunction with the accompanying drawings.

This invention can be more fully understood from the following detailed description when taken in conjunction with the accompanying drawings, in which:
Fig. 1 is a block diagram illustrating an electronic English/French dictionary apparatus to which the present invention is applied;
Fig. 2A is a diagram illustrating the contents of an English index memory of the electronic English/French dictionary apparatus;
Fig. 2B is a diagram illustrating the contents of a French index memory of the electronic English/French dictionary apparatus;
Fig. 3A is a diagram illustrating the contents of an English/French dictionary memory of the electronic English/French dictionary apparatus;
Fig. 3B is a diagram illustrating the contents of a French/English dictionary memory of the electronic English/French dictionary apparatus;
Fig. 4A is a diagram illustrating the contents of an English-word memory of the electronic English/French dictionary apparatus;
Fig. 4B is a diagram illustrating the contents of a French-word memory of the electronic english/French dictionary apparatus;
Fig. 5 is a flowchart illustrating the general operation of the electronic English/French dictionary apparatus;
Fig. 6 is a flowchart illustrating an operation for displaying an equivalent word;
Fig. 7 is a flowchart illustrating an operation for displaying a related word;
Fig. 8 is a flowchart illustrating an operation for displaying a target word;
Figs. 9A through 9H are diagrams illustrating various types of displays given in the operation of the electronic English/French dictionary apparatus; and
Fig. 10 is a diagram illustrating the correlation between plural pieces of information in a dictionary memory.

The following will describe a case where the present invention is applied to an electronic English/French dictionary apparatus.

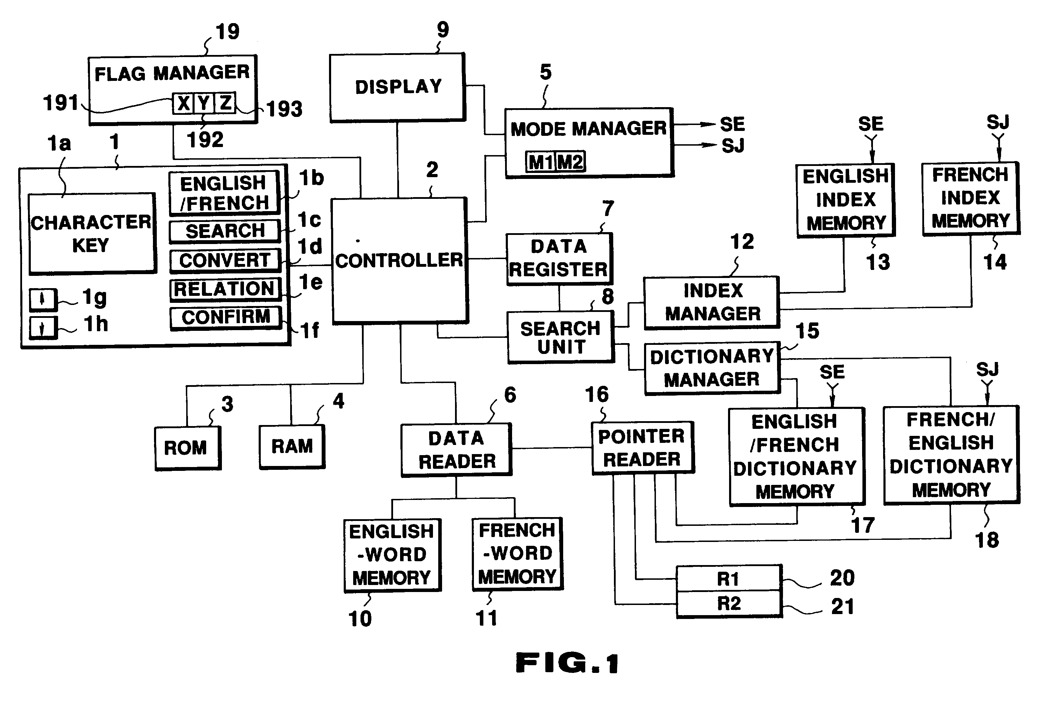

Fig. 1 presents a circuit block diagram of the embodiment.

A key input section 1 includes various keys in addition to a set of character keys 1a. An "English/French" key 1b serves to set one of an English/French dictionary function and a French/English dictionary function. Upon each operation of the key 1b, the functions are alternately switched from one to the other.

A "Search" key 1c when operated gives a command to start searching for a word. A "Translation" key 1d is for displaying an equivalent word among dictionary information found for the selected word. A "Relation" key 1e is for displaying those words among the dictionary information which relate to one word, such as an antonym and synonym, stored in a dictionary. A "Confirm" key 1f functions to call a reference word and display it while the contents of the dictionary are being displayed.

The key input section 1 further includes a "↑" key 1g and "↓" key 1h to scroll the display.

Key input data entered through the key input section 1 is sent to a controller 2, which sends a control signal to circuits to execute operations associated with the received key input data. A ROM 3 has a control program for the operation stored therein, and a RAM 4 stores data at the time of executing various types of processing.

A mode manager 5 has a flag M1 which is ,set by designation by an English-to-French mode and a flag M2 which is set by designation of a French-to-English mode. The mode manager 5 sends an English-to-French mode signal SE to an English index memory 13 and an English/French dictionary memory 17 in response to the designation of the English-to-French mode, and sends a French-to-English mode signal SJ to a French index memory 14 and a French/English dictionary memory 18 in response to the designation of the French-to-English mode.

A data reader 6 reads an English word from an English-word memory 10 or a French word from a French-word memory 11 in accordance with pointer data to be described later. A pointer reader 16 reads pointer data from the English/French dictionary memory 17 or English-to-French dictionary memory 18, which will be described later. The English-word memory 10 and French-word memory 11 store words in an alphabetical order as illustrated in Figs. 4A and 4B; these pieces of word data are to be displayed.

A data register 7 registers an English word or French word input via the key input section 1, under the control of the controller 2.

A search unit 8 searches index data stored in the English index memory 13 or French index memory 14 via an index manager 12 based on the data written in the data register 7. The search unit 8 also searches data stored in the English/French dictionary memory 17 or French/English dictionary memory 18 via a dictionary manager 15. In the English index memory 13 the head character of each English word or several characters including the head character thereof are stored, affixed with an associated start pointer EHn₁, EHn₂, ..., as shown in Fig. 2A. For instance, in searching the English/French dictionary memory 17 for a word "abandon," the first three characters "aba" of "abandon" are searched from the English index memory 13. A start pointer, "EHn₂" associated with the character set "aba" is read out. Then, the dictionary manager 15 sequentially reads entries in the English/French dictionary memory 17 from the position "EHn₂" and compares them with an input word.

In the English/French dictionary memory 17, English words are stored as entries in an alphabetical order, as shown in Fig. 3A. Referring to this diagram, parentheses indicate that characters within are stored in the index memory 13; actually the characters in the parentheses are not stored in the English/French dictionary memory 17. The memory 17 further stores, as pointer data E, an address of the position in the English-word memory 10 where the entire is stored. Character data is read out from the English-word memory 10 and is used for actual data display.

The English/French dictionary memory 17 further stores, as pointer data JH, the address of the position in the French/English dictionary memory 18 where an equivalent French word for each entry is stored. Further, if there is a synonym for each entry, the English/French dictionary memory 17 stores a flag F1 for each entry, which indicates the presence of such a synonym as related word data, and pointer data EHn indicating the position of the synonym stored in the memory 17. If there is an antonym for each entry, the English/French dictionary memory 17 likewise stores a flag F2 for each entry, which indicates the presence of such an antonym, and pointer data EHn indicating the position of the antonym stored in the memory 17.

The French index memory 14 and French/English dictionary memory 18 have substantially same structures as the above-described English index memory 13 and English/French dictionary memory 17 (see Figs. 2B and 3B).

In short, the dictionary memories 17 and 18 store pointer data (EH, JH), which is address information of their own dictionaries and address information of the other dictionary, as dictionary information for an entry.

A flag manager 19 stores an X flag 191, a Y flag 192 and a Z flag 193.

The X flag 191 is set when pointer data (E, J) of display data of a word to be searched (English word or French word) is written in an R1 register 20 at the time of displaying a related word.

The Y flag 192 is set when pointer data (E, J) of the related word is written in an R2 register 21 at the time of displaying an equivalent word for the displayed related word.

The Z flag 193 is set when the word to be searched is displayed.

A display unit 9 comprises a liquid crystal display section of a dot matrix type, for example. In this embodiment, the display unit 9 is capable of displaying 3-line data.

### Operation

The operation of the thus constituted embodiment will be described below referring to the flowcharts shown in Figs. 5. through 8.

First, in step A1 in Fig. 5, an operator designates either the English-to-French mode or French-to-English mode by operating the "English/French" key 1b of the key input section 1. The operator then enters a word to be looked up using the character keys 1a in step A2. The input train of characters is written in the data register 7 via the controller 2. When the operator operates the "Search" key 1c, dictionary searching is executed in step A3.

The following description will be given of a case where "distinct" is to be looked up in the dictionary in the English-to-French mode which uses the English/French dictionary function.

When the operator enters "distinct" using the character keys 1a and operates the "Search" key 1c, the search unit 8 retrieves data coincides with a train of head characters of "distinct" from the English index memory 13 via the index manager 12. In this example, as should be understood from Fig. 2A, as the train of head characters of "distinct" coincides with "dis" in the English index memory 13, "EHnx" is read out. Then, the search unit 8 gives "EHnx" to the dictionary manager 15 to sequentially read out entries from the English/French dictionary memory 17 starting at the position corresponding to EHnx. The search unit 8 determine whether each data comprising the "dis" and each read out entry coincides with the data stored in the data register 7. The pointer position, EH4, of the English/French dictionary memory 17 is specified and "tinct" is read out. The search unit 8 puts "dis" from the English index memory 13 and "tinct" from the English/French dictionary memory 17 together, detects that the linked data coincides with the input word, and treats the data as the one to be searched.

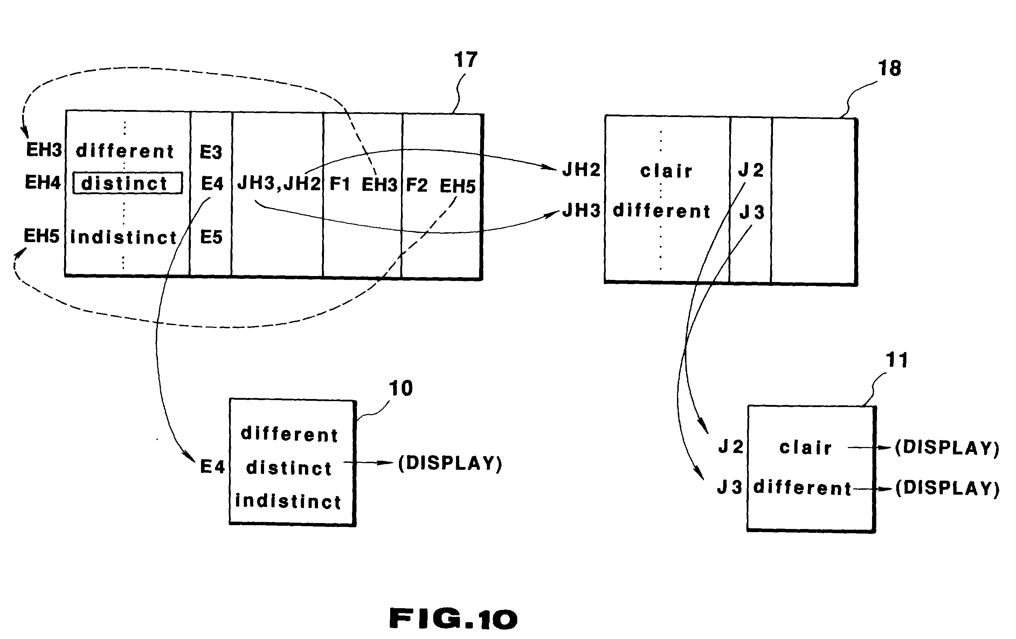

The flow advances to step A4 where the word which has been determined to coincide with the input word is displayed. As the display unit 9 can display three lines of data, the word to be searched is displayed on the first line while two words stored in the English-word memory 10 following the target word are displayed on the second and third lines, respectively. In this case, pointer data "E4" indicating the position of "distinct" stored in the English-word memory 10 is read out from the English/French dictionary memory 17 and is supplied to the data reader 6. The data reader 6 in turn reads out display data from the address E4 in the English-word memory 10 (see Fig. 4A) and sends it to the controller 9. The controller 9 then displays "distinct" on the first line of the display screen of the display unit 9. Fig. 10 illustrates the relation between the pointer data in this search example and the memory. Two words, "distinction" and "distinctive" following "distinct" in the memory 10 are likewise read out from the English-word memory 10 and displayed on the second and third lines, respectively. This state is shown in Fig. 9A. When the scroll key is operated in this state, the decision in step A5 becomes YES and the display data is scrolled in step A6.

### Operation Invoked by "Translation" Key

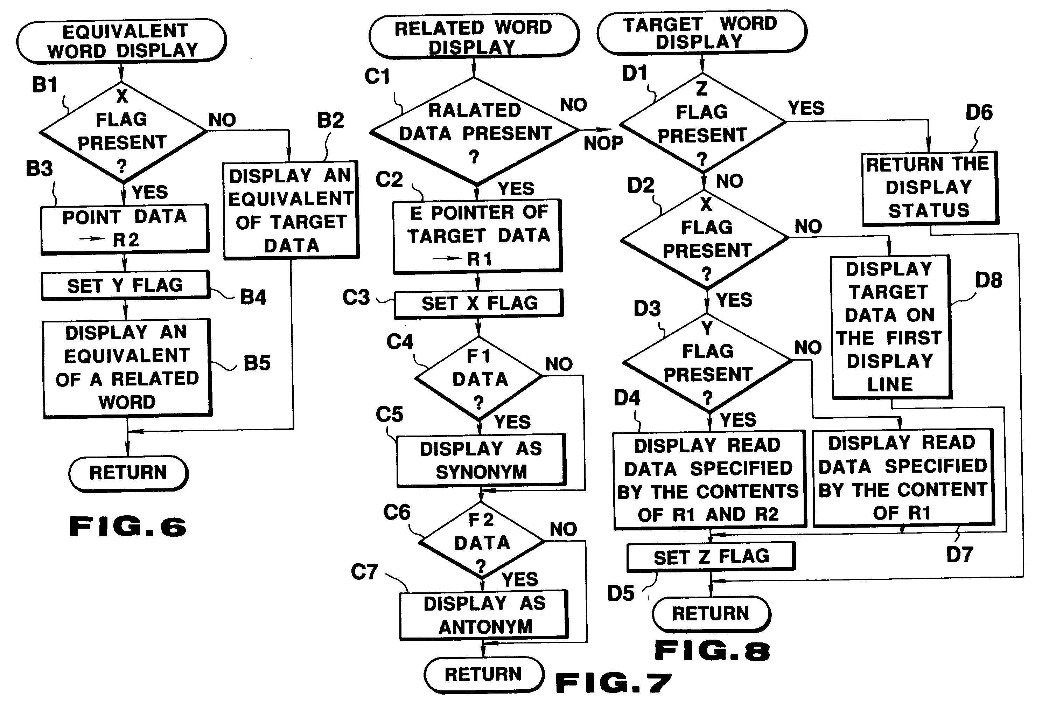

When the "Translation" key 1d is operated at the display state shown in Fig. 9A, the flow advances to step A8 from step A7 to execute an operation for displaying an equivalent word. This display operation is illustrated by the flowchart in Fig. 6.

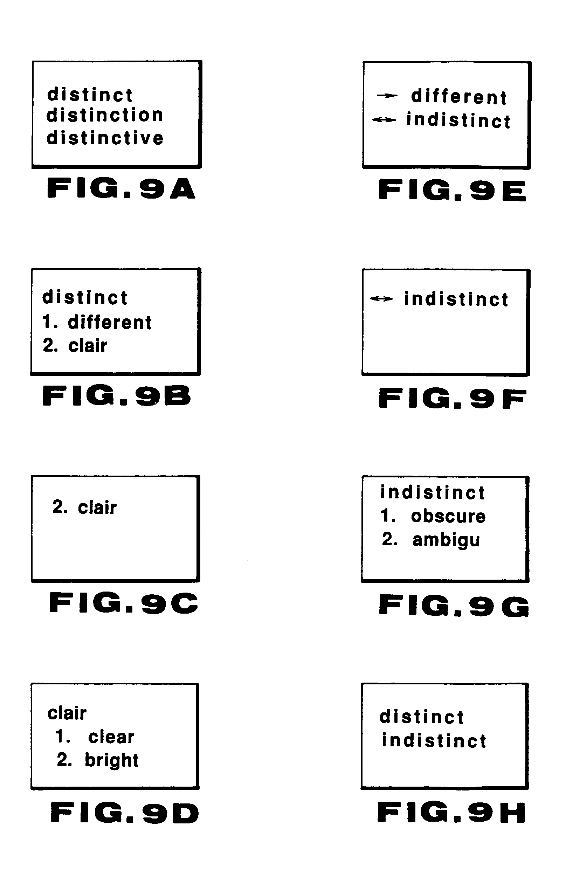

First, it is determined in step B1 whether or not the X flag 191 is set in the flag manager 19. Since the X flag is set when a related word is displayed (which will be described later), the decision is NO and the flow advances to step B2. In step B2 a French equivalent word for "distinct" i.e., reference word (word displayed on the first line) is displayed. More specifically, the dictionary manager 15 reads out the JH pointer data (JH3, JH2) from the English/French dictionary memory 17 and addresses the French/English dictionary memory 18 based on the read-out data (see Fig. 10). "(dif)fé rent/J3" and "(cla)ir/J2" are stored respectively at the addresses JH3and JH2 in the French/English dictionary memory 18 (see Fig. 3B), and the pointer reader 16 reads out "J3" and "J2" and gives them to the data reader 6. Consequently, "diffé rent" and "clair" are read out from the French-word memory 11 (see Fig. 4B) at the positions J3 and J2, and are displayed as French equivalent words for "distinct" as shown in Fig. 9B.

Assume now that the operator operates the "↓" key 1h twice to scroll the display so that "clair" comes to the first line (Fig. 9C). To acquire an English equivalent for the French "clair," the operator operates the "English/French" key 1b to set the apparatus in French-to-English mode, then operates the "Translation" key 1d. As a result, equivalent word information EH2 and EH1 for "clair" are likewise read out from the French/English dictionary memory 18. E2 and E1 are then read out from the positions EH2 and EH1 in the English/French dictionary memory 17, and "clear" and "bright" are read out respectively from the positions E2 and E1 in the English-word memory 10. These English words are then displayed as shown in Fig. 9D.

### Operation Invoked by "Relation" Key

When the operator operates the "Relation" key 1e at the display state shown in Fig. 9A, the flow advances to step A10 from step A7 in Fig. 5 to execute an operation for displaying a related word. This display operation is illustrated by the flowchart in Fig. 7.

It is determined in step C1 whether or not there exists related data in the dictionary memory 12. In other words, it is determined whether or not there is data affixed with flag data F1 and F2 besides equivalent word information.

As data "F1 EH3" and "F2 EH5" exist for "distinct" (see Fig. 3A), the flow advances to step C2 where pointer data "E4" of "distinct" in the English-word memory 10 is registered in the R1 register 20. In the subsequent step C3, the X flag 191 of the flag manager 19 is set. Data about a related word is read out from the English/French dictionary memory 17; if the flag F1 is affixed to the data, this data is displayed as a synonym (steps C4 and C5) whereas in the case of the flag F2 affixed to the data, it is displayed as an antonym (steps C6 and C7). In this example, "different" corresponding to "EH3" is displayed together with a symbol "→" which indicates a synonym, and "indistinct" corresponding to "EH5" is displayed together with a symbol "←"indicating an antonym, as shown in Fig. 9E. (See Fig. 10.)

To look up a French word for an antonym for "distinct," the operator operates the "↓" key 1h to designate "indistinct" as shown in Fig. 9F, then operate the "Translation" key 1d. The sequence of key operations starts the process for displaying an equivalent word as shown in Fig. 6.

First, it is checked if the X flag is present in step B1.

As a related word, "indistinct," is displayed and the X flag is set in this example, the flow advances to step B3 where pointer data "E5" indicating "indistinct" is written in the R2 register 21. In the subsequent step B4, the Y flag 192 is set in the flag manager 19. Then, equivalent word information of "indistinct" is read out from the English/French dictionary memory 17 and is displayed in the next step B5. Data processing for displaying the information is carried out in the same manner as described earlier. Finally, the display shown in Fig. 9G is provided.

### Operation Invoked by "Confirm" Key

To confirm the first reference word, "distinct," in the search during displaying what is shown in Fig. 9G, the "Confirm" key 1f should be operated so that the flow advances to step A11 where the reference word can be displayed. The operational flow for this operation is illustrated in Fig. 8.

First, it is determined in step D1 whether or not the Z flag 193 is set in the flag manager 19. As the flag 193 is set when a reference word is displayed by operation of the "Confirm" key, the decision in step D1 is NO this time. The flow therefore advances to step D2.

Since the X and Y flags are set in the state shown in Fig. 9G, the decision in steps D2 and D3 become YES and the flow advances to step D4.

In this step D4, data (pointer data) are read out from the R1 register 20 and R2 register 21. Words specified by the pointer data are read out from the English-word memory 10. In this example, the former register 20 is holding "E4" and the latter is holding "E5," so that "distinct" and "indistinct" will be displayed (Fig. 9H). The Z flag 193 is then set in step D5. Viewing the display, the operator can confirm which word has been looked up first.

When the "Confirm" key 1f is operated next, the decision in step D1 becomes YES and the flow advances to step D6. As a result, the display returns to what is shown in Fig. 9G.

If the "Confirm" key 1f is operated with a related word being displayed, the flow advances to step D7 from step D3 to display the reference data according to the contents of the R1 register 20.

If the "Confirm" key 1f is operated when the reference data disappears by the scrolling operation while displaying an equivalent word in step B2, the reference data can be displayed on the first line.

In other words, with the original word (reference word) having disappeared from the screen when the dictionary function is used, operating the "Confirm" key causes the original word to reappear.

Although the English/French dictionary memory 17 has equivalent words and related words stored therein as positional information of entries in the French/English dictionary memory 18 in association with those in the memory 17 in the above embodiment, the memories 17 and 18 may store addresses of to-be-displayed data in the respective memories 10 and 11. For instance, the English/French dictionary memory 17 may store the addresses "J3, J2" in the French-word memory 11 as equivalent words for "distinct."

According to the dictionary design of the present invention, if different words can be expressed by the same equivalent word, only one piece of equivalent word data needs to be stored while the same positional information is affixed to the individual words. This feature can prevent the otherwise redundant storage of the same word in the dictionary memories, making it possible to reduce the memory capacity. Further, since displayed data can be used for transition to the next dictionary searching, the dictionaries are very easy to use.

## Claims

1. An electronic dictionary apparatus which displays dictionary information related to a word entered through a keyboard on a display means comprising:
dictionary means (10-18) for storing entries and dictionary information related to said entries including addresses which point to other entries, wherein each dictionary information related to a particular entry comprises a plurality of words;
search means (2,8) for searching for an entry stored in said dictionary means which coincides with said word input via said keyboard (1) and;
first control means (2) for causing said display means to display dictionary information related to said entry searched for by said search means;
**characterised by further comprising,**
select means (1,2) for selecting without reentering the characters one word from said plural words displayed as dictionary information for the entry searched for by the search means; and
second control means (1,2)for causing said search means to search for an entry stored in said dictionary means which coincides with said word selected by said select means and for causing said display means to display dictionary information related to said selected word.

2. An electronic dictionary apparatus according to claim 1, characterized in that said dictionary information includes at least one of a synonym and an antonym of the same language of an entry.

3. An electronic dictionary apparatus according to claim 2, characterized in that said dictionary information including at least one of a synonym and an antonym in said dictionary means includes positional information of a related entry stored in said dictionary means; and
said first control means includes means for indicating an entry stored in said dictionary means (12, 15) in response to said positional information.

4. An electronic dictionary apparatus according to claim 3, characterized in that said apparatus further comprises storage means (10, 11) for storing display data representing each entry to be displayed on said display means; and
said dictionary means includes memory means (17, 18) for storing information of a position of display data of an entry stored in said storage means (10, 11) in association with said entry.

5. An electronic dictionary apparatus according to claim 1, characterized in that said dictionary means includes:
first dictionary means (17) for storing entries of a first language and dictionary information indicating equivalent words of a second language for said entries; and
second dictionary means (18) for storing entries of said second language and dictionary information indicating equivalent words of said first language for said entries of said second language.

6. An electronic dictionary apparatus according to claim 5, characterized by further comprising dictionary designating means (1, 2, 5) for designating one of said first and second dictionary means.

7. An electronic dictionary apparatus according to claim 6, characterized by further comprising:
word select means (1) for selecting one of equivalent words of said second language while said equivalent words of said second language are being displayed using a first dictionary;
means (1) for switching designation of said dictionary designating means from designation of one dictionary means to that of the other dictionary means; and
means (2, 3) for displaying an equivalent word of said first language for said word of said second language selected by said word select means using a second dictionary.

8. An electronic dictionary apparatus according to claim 5, characterized in that said dictionary information indicating an equivalent word stored in said first dictionary means includes positional information of an entry as an equivalent word stored in said second dictionary means (17);
said dictionary information indicating an equivalent word stored in said second dictionary means includes positional information of an entry as an equivalent word stored in said first dictionary means (18); and
said first control means includes means (15, 16) for reading said positional information as dictionary information from said first dictionary means, and means (15, 16) for indicating an entry in said second dictionary means by said read-out positional information.

9. An electronic dictionary apparatus according to claim 8, characterized in that said apparatus further comprises storage means (10, 11) for storing display data representing each entry to be displayed on said display means; and
said dictionary means (17, 18) includes memory means for storing information of a position of display data of an entry stored in said storage means (10, 11) in association with said entry.

10. An electronic dictionary apparatus according to claim 8, characterized in that said word select means (1) has means for selecting one of words of said second language displayed on said display means; and
said second control means includes means (15, 16) for reading out positional information stored in association with a selected entry in said second dictionary means, and means for indicating an entry in said first dictionary means by said read-out positional information.

11. An electronic dictionary apparatus according to claim 1, characterized by further comprising third control means (2, 6, 9) for permitting said display means to display an entry detected to be coincident with an input word by said search means (8).

12. An electronic dictionary apparatus according to claim 11, characterized by further comprising confirmation means (1f, 2) for redisplaying said entry displayed by said third control means, in a state where said dictionary information is displayed on said display means by said first or second control means and said entry displayed by said third control means is off a display screen.

## Patentansprüche

1. Elektronisches Wörterbuch, das Wörterbuchinformation, die mit einem über eine Tastatur eingegebenen Wort in Beziehung steht, auf einer Anzeigeeinrichtung anzeigt, umfassend:
eine Wörterbucheinrichtung (10-18), die Einträge und mit den Einträgen in Beziehung stehende Wörterbuchinformation, einschließlich Adressen, die auf andere Einträge zeigen, speichert, wobei jede mit einem einzelnen Eintrag in Beziehung stehende Wörterbuchinformation eine Mehrzahl von Wörtern umfaßt;
eine Sucheinrichtung (2, 8), die nach einem in der Wörterbucheinrichtung gespeicherten Eintrag sucht, der mit dem über die Tastatur (1) eingegebenen Wort übereinstimmt, und
eine erste Steuereinrichtung (2), die die Anzeigeeinrichtung veranlaßt, Wörterbuchinformation anzuzeigen, die mit dem durch die Sucheinrichtung gesuchten Eintrag in Beziehung steht,
dadurch gekennzeichnet, daß es weiter umfaßt:
eine Auswahleinrichtung (1, 2), die, ohne die Buchstaben neu einzugeben, ein Wort aus der Mehrzahl von Wörtern auswählt, die als Wörterbuchinformation für den durch die Sucheinrichtung gesuchten Eintrag angezeigt wird, und
eine zweite Steuereinrichtung (1, 2), die die Sucheinrichtung veranlaßt, nach einem in der Wörterbucheinrichtung gespeicherten Eintrag zu suchen, der mit dem durch die Auswahleinrichtung ausgewählten Wort übereinstimmt, und die Anzeigeeinrichtung veranlaßt, mit dem ausgewählten Wort in Beziehung stehende Wörterbuchinformation anzuzeigen.

2. Elektronisches Wörterbuch nach Anspruch 1, dadurch gekennzeichnet, daß die Wörterbuchinformation wenigstens ein Synonym oder ein Antonym derselben Sprache eines Eintrages umfaßt.

3. Elektronisches Wörterbuch nach Anspruch 2, dadurch gekennzeichnet, daß die Wörterbuchinformation, die wenigstens ein Synonym oder ein Antonym in der Wörterbucheinrichtung einschließt, Positionsinformation eines in der Wörterbucheinrichtung gespeicherten verwandten Eintrages umfaßt, und
die erste Steuereinrichtung eine Einrichtung umfaßt, die als Reaktion auf die Positionsinformation einen in der Wörterbucheinrichtung (12, 15) gespeicherten Eintrag bezeichnet.

4. Elektronisches Wörterbuch nach Anspruch 3, dadurch gekennzeichnet, daß das Gerät weiter eine Speichereinrichtung (10, 11) umfaßt, die Anzeigedaten speichert, die jeden auf der Anzeigeeinrichtung anzuzeigenden Eintrag darstellen, und
die Wörterbucheinrichtung weiter eine Speichereinrichtung (17, 18) umfaßt, die Information einer Position von Anzeigedaten eines in der Speichereinrichtung (10, 11) gespeicherten Eintrages in Verbindung mit dem Eintrag speichert.

5. Elektronisches Wörterbuch nach Anspruch 1, dadurch gekennzeichnet, daß die Wörterbucheinrichtung umfaßt:
eine erste Wörterbucheinrichtung (17), die Einträge einer ersten Sprache und Wörterbuchinformation speichert, die äquivalente Wörter einer zweiten Sprache für die Einträge bezeichnet, und
eine zweite Wörterbucheinrichtung (18), die Einträge der zweiten Sprache und Wörterbuchinformation speichert, die äquivalente Wörter der ersten Sprache für die Einträge der zweiten Sprache bezeichnet.

6. Elektronisches Wörterbuch nach Anspruch 5, dadurch gekennzeichnet, daß es weiter eine Wörterbuch-Benennungseinrichtung (1, 2, 5) umfaßt, die die erste oder die zweite Wörterbucheinrichtung benennt.

7. Elektronisches Wörterbuch nach Anspruch 6, dadurch gekennzeichnet, daß es weiter umfaßt:
eine Wortauswahleinrichtung (1), die eines von äquivalenten Wörtern der zweiten Sprache auswählt, während die äquivalenten Wörter der zweiten Sprache unter Verwendung eines ersten Wörterbuches angezeigt werden;
eine Einrichtung (1), die die Benennung der Wörterbuch-Benennungseinrichtung von der Benennung einer Wörterbucheinrichtung auf die der anderen Wörterbucheinrichtung umschaltet, und
eine Einrichtung (2, 3), die ein äquivalentes Wort der ersten Sprache für das Wort der zweiten Sprache anzeigt, das durch die Wortauswahleinrichtung unter Verwendung eines zweiten Wörterbuches ausgewählt wird.

8. Elektronisches Wörterbuch nach Anspruch 5, dadurch gekennzeichnet, daß die Wörterbuchinformation, die ein in der ersten Wörterbucheinrichtung gespeichertes äquivalentes Wort bezeichnet, Positionsinformation eines Eintrages als ein in der zweiten Wörterbucheinrichtung (18) gespeichertes äquivalentes Wort umfaßt;
die Wörterbuchinformation, die ein in der zweiten Wörterbucheinrichtung gespeichertes äquivalentes Wort bezeichnet, Positionsinformation eines Eintrages als ein der ersten Wörterbucheinrichtung (17) gespeichertes äquivalentes Wort umfaßt, und
die erste Steuereinrichtung eine Einrichtung (15, 16) umfaßt, die die Positionsinformation als Wörterbuchinformation aus der ersten Wörterbucheinrichtung liest, sowie eine Einrichtung (15, 16), die einen Eintrag in der zweiten Wörterbucheinrichtung durch die gelesene Positionsinformation bezeichnet.

9. Elektronisches Wörterbuch nach Anspruch 8, dadurch gekennzeichnet, daß das Gerät weiter eine Speichereinrichtung (10, 11) umfaßt, die Daten speichert, die jeden auf der Anzeigeeinrichtung anzuzeigenden Eintrag darstellen, und
die Wörterbucheinrichtung (17, 18) eine Speichereinrichtung umfaßt, die Information einer Position von Anzeigedaten eines in der Speichereinrichtung (10, 11) gespeicherten Eintrages in Verbindung mit dem Eintrag speichert.

10. Elektronisches Wörterbuch nach Anspruch 8, dadurch gekennzeichnet, daß die Wortauswahleinrichtung (1) eine Einrichtung besitzt, die eines der auf der Anzeigeeinrichtung angezeigten Wörter der zweiten Sprache auswählt, und
die zweite Steuereinrichtung eine Einrichtung (15, 16) umfaßt, die in der zweiten Wörterbucheinrichtung in Verbindung mit einem ausgewählten Eintrag gespeicherte Positionsinformation ausliest, sowie eine Einrichtung, die einen Eintrag in der ersten Wörterbucheinrichtung durch die ausgelesene Positionsinformation bezeichnet.

11. Elektronisches Wörterbuch nach Anspruch 1, dadurch gekennzeichnet, daß es weiter eine dritte Steuereinrichtung (2, 6, 9) umfaßt, die der Anzeigeeinrichtung erlaubt, einen durch die Sucheinrichtung (8) als mit eingegebenen Wort übereinstimmend herausgefundenen Eintrag anzuzeigen.

12. Elektronisches Wörterbuch nach Anspruch 11, dadurch gekennzeichnet, daß es weiter eine Bestätigungseinrichtung (1f, 2) umfaßt, um den durch die dritte Steuereinrichtung angezeigten Eintrag wieder anzuzeigen, in einem Zustand, wo die Wörterbuchinformation durch die erste oder zweite Steuereinrichtung auf der Anzeigeeinrichtung angezeigt wird und der durch die dritte Steuereinrichtung angezeigte Eintrag sich nicht auf einem Anzeigeschirm befindet.

## Revendications

1. Appareil de dictionnaire électronique qui affiche une information de dictionnaire se rapportant à un mot entré par l'intermédiaire d'un clavier sur un moyen d'affichage, comprenant:
un moyen de dictionnaire (10-18) pour stocker des entrées et une information de dictionnaire se rapportant auxdites entrées, incluant des adresses qui pointent sur d'autres entrées, dans lequel chaque information de dictionnaire se rapportant à une entrée particulière comprend une pluralité de mots ;
un moyen de recherche (2, 8) pour rechercher une entrée stockée dans ledit moyen de dictionnaire qui coïncide avec ladite entrée de mot via ledit clavier (1) ; et
un premier moyen de commande (2) pour forcer ledit moyen d'affichage à afficher une information de dictionnaire se rapportant à ladite entrée recherchée par ledit moyen de recherche,
caractérisé en ce qu'il comprend en outre :
un moyen de sélection (1, 2) pour sélectionner, sans ré-entrer les caractères, un mot parmi lesdits plusieurs mots affichés en tant qu'information de dictionnaire pour l'entrée recherchée par le moyen de recherche ; et
un second moyen de commande (1, 2) pour forcer ledit moyen de recherche à rechercher une entrée stockée dans ledit moyen de dictionnaire qui coïncide avec ledit mot sélectionné par ledit moyen de sélection et pour forcer ledit moyen d'affichage à afficher une information de dictionnaire se rapportant audit mot sélectionné.

2. Appareil de dictionnaire électronique selon la revendication 1, caractérisé en ce que ladite information de dictionnaire inclut au moins un élément pris parmi un synonyme et un antonyme de la même langue d'une entrée.

3. Appareil de dictionnaire électronique selon la revendication 2, caractérisé en ce que ladite information de dictionnaire qui inclut au moins un élément pris parmi un synonyme et un antonyme dans ledit moyen de dictionnaire inclut une information de position d'une entrée en relation stockée dans ledit moyen de dictionnaire ; et
ledit premier moyen de commande inclut un moyen pour indiquer une entrée stockée dans ledit moyen de dictionnaire (12, 15) en réponse à ladite information de position.

4. Appareil de dictionnaire électronique selon la revendication 3, caractérisé en ce que ledit appareil comprend en outre un moyen de stockage (10, 11) pour stocker des données d'affichage représentant chaque entrée à afficher sur ledit moyen d'affichage ; et
ledit moyen de dictionnaire inclut un moyen de mémoire (17, 18) pour stocker une information d'une position de données d'affichage d'une entrée stockée dans ledit moyen de stockage (10, 11) en association avec ladite entrée.

5. Appareil de dictionnaire électronique selon la revendication 1, caractérisé en ce que ledit moyen de dictionnaire inclut :
un premier moyen de dictionnaire (17) pour stocker des entrées d'une première langue et une information de dictionnaire indiquant des mots équivalents d'une seconde langue pour lesdites entrées ; et
un second moyen de dictionnaire (18) pour stocker des entrées de ladite seconde langue et une information de dictionnaire indiquant des mots équivalents de ladite première langue pour lesdites entrées de ladite seconde langue.

6. Appareil de dictionnaire électronique selon la revendication 5, caractérisé en ce qu'il comprend en outre un moyen de désignation de dictionnaire (1, 2, 5) pour désigner l'un desdits premier et second moyens de dictionnaire.

7. Appareil de dictionnaire électronique selon la revendication 6, caractérisé en ce qu'il comprend en outre :
un moyen de sélection de mot (1) pour sélectionner un mot pris parmi des mots équivalents de ladite seconde langue tandis que lesdits mots équivalents de ladite seconde langue sont en train d'être affichés en utilisant un premier dictionnaire ;
un moyen (1) pour commuter une désignation dudit moyen de désignation de dictionnaire depuis la désignation d'un moyen de dictionnaire sur celle de l'autre moyen de dictionnaire ; et
un moyen (2, 3) pour afficher un mot équivalent de ladite première langue pour ledit mot de ladite seconde langue sélectionné par ledit moyen de sélection de mot en utilisant un second dictionnaire.

8. Appareil de dictionnaire électronique selon la revendication 5, caractérisé en ce que ladite information de dictionnaire indiquant un mot équivalent stocké dans ledit premier moyen de dictionnaire inclut une information de position d'une entrée en tant que mot équivalent stocké dans ledit second moyen de dictionnaire (17) ;
ladite information de dictionnaire indiquant un mot équivalent stocké dans ledit second moyen de dictionnaire inclut une information de position d'une entrée en tant que mot équivalent stocké dans ledit premier moyen de dictionnaire (18) ; et
ledit premier moyen de commande inclut un moyen (15, 16) pour lire ladite information de position en tant qu'information de dictionnaire dans ledit premier moyen de dictionnaire et un moyen (15, 16) pour indiquer une entrée dans ledit second moyen de dictionnaire au moyen de ladite information de position lue.

9. Appareil de dictionnaire électronique selon la revendication 8, caractérisé en ce que ledit appareil comprend en outre un moyen de stockage (10, 11) pour stocker des données d'affichage représentant chaque entrée à afficher sur ledit moyen d'affichage ; et
ledit moyen de dictionnaire (17, 18) inclut un moyen de mémoire pour stocker une information d'une position de données d'affichage d'une entrée stockée dans ledit moyen de stockage (10, 11) en association avec ladite entrée.

10. Appareil de dictionnaire électronique selon la revendication 8, caractérisé en ce que ledit moyen de sélection de mot (1) comporte un moyen pour sélectionner un mot parmi des mots de ladite seconde langue affichés sur ledit moyen d'affichage ; et
ledit second moyen de commande inclut un moyen (15, 16) pour lire une information de position stockée en association avec une entrée sélectionnée dans ledit second moyen de dictionnaire et un moyen pour indiquer une entrée dans ledit premier moyen de dictionnaire au moyen de ladite information de position lue.

11. Appareil de dictionnaire électronique selon la revendication 1, caractérisé en ce qu'il comprend en outre un troisième moyen de commande (2, 6, 9) pour permettre audit moyen d'affichage d'afficher une entrée détectée comme coïncidant avec un mot d'entrée au moyen dudit moyen de recherche (8).

12. Appareil de dictionnaire électronique selon la revendication 11, caractérisé en ce qu'il comprend en outre un moyen de confirmation (1f, 2) pour ré-afficher ladite entrée affichée par ledit troisième moyen de commande dans un état dans lequel ladite information de dictionnaire est affichée sur ledit moyen d'affichage par ledit premier ou second moyen de commande et ladite entrée affichée par ledit troisième moyen de commande est en dehors d'un écran d'affichage.
